# EUROPEAN PATENT APPLICATION

(11) **EP 1 211 003 A2**
(43) Date of publication of application: **05.06.2002**
(21) Application number: 01128750.5
(22) Date of filing: 03.12.2001
(51) Int. Cl.: B22F 9/08

(54) **Process and apparatus for producing atomized powder using recirculating atomizing gas**

(30) Priority: 04.12.2000 US 727474
(71) Applicant: PRAXAIR TECHNOLOGY, INC., Danbury, CT 06810-5113 (US)
(72) Inventor: Jaynes, Scot Eric, Lockport, New York 14094 (US); Schottke, Lawrence Edward, Tonawanda, New York 14150 (US); Volk, James Joseph, Clarence, New York 14031 (US); Davis, Robert Bruce, Nyack, New York 10960 (US)
(74) Representative: Schwan - Schwan - Schorer

(57) **Abstract**

A process for producing atomized powder, such as a metal powder, using a recirculating atomization gas, such as helium, and the apparatus used for producing the atomized powder

## Description

### Field of the Invention

This invention relates to a process and apparatus for producing atomized powder from a molten stream of material, such as a molten metal stream, using a recirculating gas, such as helium gas.

### Background of the Invention

It is known that atomized powders can be produced by injecting a gas stream around a molten material stream through an atomizating nozzle. The atomized powders produced in this type of atomizating process can vary in shape and size. Generally, in some applications, it is desirable or necessary to have the powder in the shape of small spherical particles. Making small spherical particles depends on many factors such as material composition, temperature and velocity of the molten material, gas composition, and temperature and velocity of the gas. For example, using helium as the atomizing gas has been known to reduce particle size and improve production capacity. United States Patent No. 4,988,464 discloses a molten material that is fed through a nozzle and gas is fed around and along the molten stream through nozzle. The gas stream forms an outwardly expanding cone that defines an outer boundary and an inner boundary of the gas cone. This divergence increases the area of contact between the annular gas stream and the ambient atmosphere within the annular gas stream. A portion of the gas injected though nozzle in the outwardly expanding cone defined by the boundaries reverses its flow direction and flows toward the nozzle in a direction axially opposite to that of the diverging annular gas stream. The atomizing gas may reverse direction from the entrance of nozzle forming droplet and then the spherical particles. It has been observed that higher velocity in the direction has produced smaller, more spherical droplets. In addition to the nozzle described above, other nozzle designs, such as a "free fall" design should give more spherical particles with the higher gas velocities available with helium. Since sonic velocity is directly proportional to gas density, helium has the higher potential velocity than other gases except hydrogen. Thus, helium is the preferred gas for applications requiring smaller and more spherical particles.

United States Patent No. 5,390,533 discloses a process and system for pressurizing a vessel for integrity testing with gas comprising helium, and purifying the gas comprising helium for reuse. The process for purifying the gas stream comprising helium comprises drying the gas stream; separating the dried gas stream in a membrane separator stage into a helium-enriched permeate product stream and a helium-depleted raffinate stream; recovering helium in the raffinate stream in a membrane stripper stage thereby producing a purge stream; and purging water from the dryer with the purge stream.

United States Patent No. 4,845,334 discloses a system and method for conditioning and recycling inert gases that are used in a plasma furnace. The method comprises the steps of receiving the gas that is output from the plasma furnace and cooling the gas to a desired temperature. Substantially all the dust is removed from the gas and then the gas is compressed to the desired pressure using an oil-flooded screw compressor. Any oil which is introduced by the compressor is removed from the gas and an alarm is provided to signal a high oil level. Substantially all water vapor in the gas is removed and the gas is filtered to remove any remaining dust and small particulates. The amounts of water vapor and oxygen in the gas are monitored. The gas is then recycled to the plasma furnace.

United States Patent No. 5,377,491 discloses a system and process for recovering high purity coolant gas from at least one fiber optic heat exchanger, characterized by controlling a flow of coolant gas into and out of the heat exchanger using a pressure, impurity and/or flow rate monitoring or transmitting means in conjunction with a flow adjusting or controlling device to limit air or other gas infiltration into at least one fiber optic passageway of the heat exchanger. A sealing means may also be used at at least one end of the fiber optic passageway to further reduce air or other gas infiltration into the passageway. The resulting high purity coolant gas from the outlet of the heat exchanger is delivered to the inlet of the heat exchanger. Optionally, the resulting coolant gas from the outlet of the heat exchanger may be cooled, filtered and/or purified before being delivered to the inlet of heat exchanger.

United States Patent No. 5,158,625 discloses a process for heat treating articles by hardening them in a recirculating gas medium which is in contact with the treated articles, the hardening gas being cooled by means of a heat exchanger, of the type in which helium is used as hardening gas, and is stored under holding pressure in a buffer container, wherein at the end of a hardening operation, a helium load is extracted from the treatment enclosure, in final phase by means of pump until a primary vacuum is obtained, the extracted helium is brought to purifying pressure by means of a compressor associated to a mechanical filter, and the helium under purifying pressure is sent to a purifier in which impurities are removed, after which it is transferred, if desired, after recompression in the buffer container.

It is an object of this invention to provide a cost effective helium recovery system for atomization furnaces to produced atomization powder.

It is another object of this invention to provide an atomization furnace with a helium recovery system that will remove contaminants such as O₂, Ng, H₂O, CO, CO₂, metal, and metal salts from spent helium exiting from the atomization furnace.

### SUMMARY OF THE INVENTION

The invention relates to a process for producing atomization powder using recirculating atomizing gas comprising the steps:
(a) feeding a stream of atomizing gas, such as helium, at the desired temperature and pressure along with a stream of molten material into at least one atomization furnace such that the atomizing gas contacts the stream of molten material to form droplets and then solidifying the droplets to form powder;
(b) removing particulates from the spent atomizing gas;
(c) feeding at least a portion of the particulate-free atomizing gas to a purification unit to remove selected impurities; and
(d) recirculating the purified atomizing gas back into the atomization furnace.

The atomizing gas is generally an inert or substantially inert gas such as argon, helium or nitrogen. Some atomization furnace systems use water or a combination of inert gases. However, manufacturers of specialty powdered metals can not use water as the atomizing gas and preferably would like to use helium because of its inertness, good thermal conductivity and high sonic velocity. The sonic velocity of helium is approximately three times greater than argon. As stated above, higher velocities result in a smaller and more spherical particle. Spent helium gas from an atomization furnace could contain one or more contaminants such as oxygen, nitrogen, water, carbon monoxide, carbon dioxide, hydrogen, metal, and/or metal salts. The subject invention is directed to a recirculating atomizing gas system that will remove one or more of the contaminants from a spent atomizing gas from an atomization furnace. An atomization furnace generally consists of several components such as a vacuum or induction furnace where a batch of metal is first melted in a tundish and then atomized in an atomizing tower or chamber. The molten metal then flows through the tundish down through a small nozzle where it is atomized by the gas. The metal droplets are cooled as they float downward in the chamber. In some cases a bath of liquefied gas is used in the bottom to provide additional cooling. The use of helium may allow for a much simpler or more flexible design. For instance, for any particular furnace, the time spend atomizing may represent a small fraction of a day such as less than an hour or two. If the gas cost is significantly reduced, then the furnace design might change to allow the continuous melting and atomizing. The resultant furnace may be significantly smaller with higher capacity.

The use of a helium recycle system has economic advantages over an argon recycle system since the separation of argon from other contaminants is much more difficult than helium from the same contaminants. An argon recycle system would most likely have a cryogenic column for purification. The use of a cryogenic column and supporting equipment is significantly more capital intensive than a helium recycle system. However, an atomizing application may use argon recycle with membrane, thermal swing absorbent (TSA), pressure swing adsorption (PSA) and/or copper oxide technology. The choice of purification technology will depend on the atomizer off-gas impurities and atomizer inlet gas specifications.

Generally the molten material is metal such as iron, steel, copper, nickel, aluminum, magnesium, lead, tin, titanium, cobalt, vanadium, tantalum and their alloys, or it may also be used to produce non-metallic powders such as employing oxides and/or ceramic materials as the molten stream.

This invention also relates to an apparatus for producing atomization powder using recirculating helium-based gas comprising at least one atomization furnace having at least one input adapted for receiving gas and molten material and at least one output adapted for discharging spent gas and powder; a particulate removal unit coupled to the at least one atomization furnace and adapted for removing particulates from the spent gas; a purification unit coupled at one end to the particulate removal unit and at an opposite end to the input of the at least one atomization furnace and operatable such that helium-based gas can be recirculated to the atomization furnace for the production of atomized powder on a continuous basis.

### Description of the Drawings

Other objects, features and advantages will occur to those skilled in the art from the following description of preferred embodiments and the following schematic diagram of a system for producing atomization powder using recirculating atomization gas pursuant to this invention.

### Detailed Description of the Invention

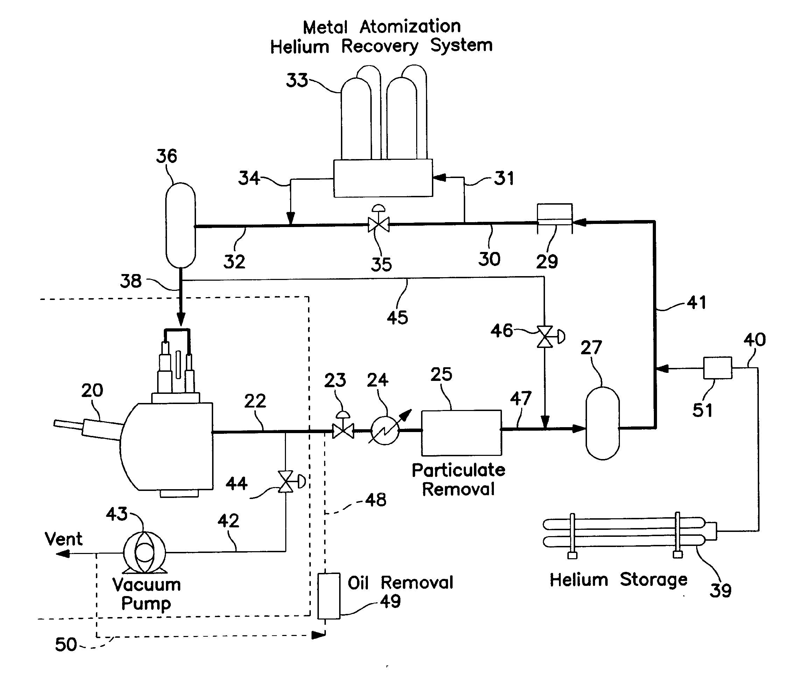

Referring to the Figure 1, a helium recovery system is shown with the preferred expected flows and equipment required for a metal atomization furnace that processes 2500 lbs/hr of molten metal. Figure 1 shows a metal atomization furnace 20 that can make fine powder using helium at a flow rate such as 4000 SCFM at a pressure of approximately 1100 psia. The helium gas with a light loading of impurities and particulate (generally <2PPM impurities and <1.5mg/m³) leaves the atomization furnace at a low pressure (generally 14.7-19.7 psia) via duct 22 and passes through valve 23. The impure helium gas is cooled in heat exchanger 24 and has the particulate removed in bag house or cyclone 25. After the output gas has been cooled, it is transported to a cyclone 25 so that particulates may be removed. The cyclone 25 is sized so that the particulates which average between about 10 microns and about 200 microns in size can be removed from the bottom of the cyclone. As in a typical cyclone, the particulate output gas enters the cyclone chamber tangentially, the cleansed gases leaving through a central opening at the top of the cyclone 25. The particulate, by virtue of their inertia, will tend to move toward the outside spearator wall from which they migrate to the bottom of the cyclone.

The particulate free gas then enters low pressure receiver 27 (pressure between about 14 and about 20 psia, and preferably between about 15 and about 17 psia). The low pressure receiver allows changes in system flows to have a minimal impact on the recovery system or the metal atomization furnace. Impure helium enters a suction of compressor 29 via duct 41 for a boost to the helium recovery system operating pressure (generally between about 300 to about 1600 psia). For the recovery system shown in this example, the desired pressure and flow is generally 1250 psia at 4000 SCFM.

The discharge of the compressor flows through duct 30 to ducts 31 and 32. For the powdered metal application being discussed in this example the impurity loading in the helium leaving the furnace is light (<2PPM). Duct 31 takes about 10% of the total flow or 400 SCFM for purification through cryogenic purification unit 33. The cryogenic purification unit 33 contains molecular sieve at liquid nitrogen temperatures. The cryogenic purification unit 33 removes effectively all gaseous impurities at the PPM level and even to the PPB level except for hydrogen and neon. The pure helium leaves the cryogenic purification unit via duct 34 and rejoins the main gas flow in duct 32. The flow through duct 30 is controlled by valve 35. Decreasing flow through valve 35 will increase flow through duct 31. The cryogenic purification unit 33 can operate at liquid oxygen temperatures if oxygen adsorption is not important and up to 200° K if carbon monoxide or hydrogen disulfide need to be removed. Other contaminants such as carbon dioxide and water could be effectively removed at room temperature.

The high pressure purified helium 32 enters high pressure receiver 36 (pressure between about 50 and about 1600 psia, and preferably between about 100 and about 300 psia) and then enters the metal atomization furnace through duct 38. High pressure receiver 36 will minimize changes in pressure caused by changes in flow through the helium recovery system.

Helium consumption will occur during the metal atomization process, during regeneration of the purification unit 33, when the furnace is opened for powdered metal removal or maintenance and through any leaks in the system. Helium make-up will come from helium storage 39 through duct 40 as the pressure in low pressure receiver 27 drops below set point. A typical set point for the low pressure receiver could be about 15 psia. Compressor 29 suction will cause the pressure to drop in low pressure receiver 27 as the quantity of helium in the recovery system drops.

The metal atomization furnace will periodically be opened to atmosphere. After the furnace is opened, the furnace chamber will be pumped down through duct 42 by vacuum pump 43. Before pump down, valve 44 is opened and the inlet to the furnace (not shown) and valve 23 is closed. The furnace chamber is pumped down by pump 43 to remove a majority of the air from the furnace (∼10milliTorr). Following the pump down valve 44 is closed and the furnace is back filled with helium (duct not shown) to operating pressure (e.g. 15 psia). The inlet to the furnace 20 and valve 23 are opened after the furnace is back filled with helium. Before a melt is started, some metal atomization systems will not use vacuum pump 43 but will purge or remove contaminates from the furnace via the helium recovery system.

The helium recovery system can operate when the furnace is not. Helium will bypass the furnace by flowing through duct 45 and valve 46 to duct 47. The helium recovery system would operate in bypass when the helium quality was not in specification and needed to be purified before the start of a batch of metal or if an unexpected load of impurities entered the recovery system and needed to be removed before entering the furnace. The furnace bypass could also be used to adjust the flow to the furnace through duct 38 if metal atomization requires variable flow rates of helium. Oil from the pumps could be removed from oil removal unit 49 via duct 50 and fed through duct 48.

### A Preferred Mode Of Operation

Under the best mode of operation, the system would remove gas from the atomizer 20 and pass through duct 22 through the cooling shell and tube heat exchanger 24 and particulate removal cyclone 25. The particulate free gas would pass through duct 47 and duct 45 whereas surge tank 27 is not needed. Compressor 29 could be comprised of an oil flooded screw compressor followed by a valve-in-piston compressor that increases the pressure to about 190 psig and about 1200 psig respectively. The compressed gas stream passes through oil removal filtration and becomes essentially hydrocarbon free gas in duct 30. A flow element in duct 31 controls the opening of valve 35 suggest that 10% of the volumetric flow in duct 30 passes through duct 31 to the cryogenic adsorption unit 33. The cryogenic adsorption unit 33 removes essentially all the impurities in the helium. The pure helium mixes in duct 34 mixes with the helium stream that passes through valve 35 in duct 32. The gas stream in duct 32 contains contaminants at a level below that required by the gas specification. Gas fills ballast tank 36 at approximately the same rate as the gas exits the ballast tank 36 via duct 38. Duct 38 delivers gas to the atomizer that requires gas at a minimum pressure of 1150 psig. Any excess gas can pass thorough duct 45 via valve 46 to duct 47. The pressures in ballast tank 36 and duct 45 control valve 46. Valve 46 will open if ballast tank 36 pressure is above 1150 psig and pressure in duct 41 below 0 psig. If ballast tank 36 pressure is below 1150 psig, then pressure in duct 41 will continue to fall below 0 psig and helium will flow through a regulator in helium manifold 51 from helium storage 39. Once per week, when the helium recovery system is not in operation, cryogenic adsorption unit 33 is regenerated. The sieve bed inside the adsorption unit can be heated to 200°F and dry helium as it passed through the bed to remove the impurities. Cryogenic adsorption unit 33 is then cooled to operational temperatures with liquid nitrogen and is ready for service. The helium recovery system would be placed in operation before flow through duct 38 to atomizer 20 is commenced. At helium recovery system startup, gas would flow through duct 45 and valve 46 to duct 47. Valve 35 would follow the same control logic as described above.

In another embodiment of the subject invention, the recirculated gas would comprise a mixture of two or more gases such as argon, nitrogen and helium.
However, a recovery system based on argon or nitrogen may require a cryogenic separation column to remove impurities. For atomization applications where the discharge pressure of the furnace is too low, a blower can be installed in duct 22 or duct 47 to satisfy the suction requirements of the compressor and the pressure drop encountered in heat exchanger 24 and particulate removal 25. For applications where helium of high purity is needed, then the cryogenic purification unit 33 can be removed from duct 31 and 34 and placed in duct 30.

The cryogenic purification unit 33 can be replaced with thermal swing adsorption (TSA), pressure swing adsorption (PSA) or membrane technology depending on the purity requirements in the furnace and the contaminate load from the furnace. The particulate removal 25 will vary for each application depending on the individual size, hazards and total volume of particulate from the furnace. Other choices for particulate removal 25 could consist of but not limited to cartridge filters, scrubbers, and cyclones. The heat exchanger 24 could be placed before or after particulate removal 25 depending on the application.

The helium remaining in furnace 20 before the furnace is opened for powder removal or maintenance could be removed by vacuum pump 43. The discharge of the vacuum pump would need to be oil and particulate free. Oil filtration 49 would be used to remove hydrocarbons and particulate from the discharge of vacuum pump 43. If the discharge of vacuum pump 43 has a high temperature then the discharge should be ducted to duct 22. If the discharge of the vacuum pump has a temperature close to ambient, then it should be ducted to duct 47. Surge tank 27 should have the necessary volume to capture the evacuated gas. In this case, vacuum pump 43 could operate while compression equipment 29 was not operating. If the evacuation of atomizer 20 took place while the helium recovery system was operating then surge tank 27 would not be needed and ballast tank 36 would need to have the extra volume.

Compressor 29 can be split into two compressors. The first compressor would use a low pressure frame design that tends to be less expensive such as an oil-flooded screw. The discharge of the oil-flooded screw would then feed the suction for the more expensive high pressure compressor. Feeding the suction of the high pressure machine with intermediate pressure gas will significantly shrink the size of the high pressure machine.

Table 1 discloses the methods of purification dependent on the type and level of impurities. Item #1 uses a copper oxide getter to remove oxygen only. For a gas stream leaving the furnace with just water as the impurity, then in Item 2 only a dryer (TSA) is need to purify the helium. If only water and oxygen are present then in Item 3, a copper oxide getter and dryer may be the most economical method for purifying the helium item. Item #4 has a light loading of impurities from the atomizer and only requires purification for 10% of the total flow. Items #5, #6, #7 and #8 each increases the percentage of the total flow that must be purified for the helium to maintain specified purity. The purification unit changes from cryogenic adsorption to PSA as economics for PSA improves with increasing flow. Item #9 uses a membrane to remove oxygen and nitrogen from a steam where an excess of nitrogen is present. Item #10 uses a membrane and TSA. The TSA was added to remove water. Item #11 uses a copper oxide getter in the main stream to remove oxygen. The slipstream contains the membrane and TSA to control the nitrogen and water. In Item #11, the membrane was not used as the primary purification for oxygen since more than a 10% slipstream would have been required to maintain the helium specification. The different purity specifications may be a result of economic conditions. For example, a powder manufacture may accept an increase concentration of nitrogen to allow for a less expensive helium recovery system.

**Table 1:**

| Purification Vs Impurities in Atomization Off-Gas | | | | |
|---|---|---|---|---|
| Item # | Impurities (Figure 1, #22) | Slip Stream % (Figure 1, #31) | Type of Purifier (Figure 1, #33) | Gas Specifications (Figure 1, #32) |
| 1 | 10 PPM to 100 PPM Oxygen Only | 100% | Copper Oxide Getter | <20 PPM O₂ <20 PPM N2 <20 PPM H₂O |
| 2 | H₂O Only | Dependent on PPM of H₂O | TSA | " |
| 3 | 20 PPM H₂O 10 PPM O₂ | 50% | Copper Oxide Getter & TSA | " |
| 4 | <2 PPM O₂ <2 PPM N₂ <2 PPM H₂O | 10% | Cryogenic Adsorption | " |
| 5 | <4 PPM O₂ <4 PPM N₂ <4 PPM H₂O | 20% | Modified Cryogenic Adsorption or PSA | " |
| 6 | <6 PPM O₂ <6 PPM N₂ <6 PPM H₂O | 30% | Modified Cryogenic Adsorption or PSA | " |
| 7 | <8 PPM O₂ <8 PPM N₂ <8 PPM H₂O | 40% | Modified Cryogenic Adsorption or PSA | " |
| 8 | <10 PPM O₂ <10 PPM N₂ <10 PPM H₂O | 50% | PSA | " |
| 9 | <2 PPM O₂ 10% N₂ | 10% | Membrane | <20 PPM O₂ 1 % N₂ |
| 10 | <2 PPM O₂ 10% N₂ <2 PPM H₂O | 10% | Membrane and TSA | <20 PPM O₂ 1% N₂ <2 PPM H₂O |
| 11 | <2 PPM O₂ 10% N₂ <2 PPM H₂O | 10% Membrane and TSA 100% CuP Getter | Membrane, TSA and Copper Oxide Getter | <20 PPM O₂ 1% N₂ <2 PPM H₂O |

Although the invention has been described with reference to specific embodiments as examples, it will be appreciated that it is intended to cover all modifications and equivalents within the scope of the appended claims.

## Claims

1. A process for producing atomized powder using recirculating atomization gas comprising the steps:
(a) feeding a swirling stream of atomizing gas, along with a stream of molten material into an atomization furnace such that the atomizating gas contacts the stream of molten material to form a spent atomizating gas and metal droplets and then solidifying said droplets to form atomized powder;
(b) removing any particulates from the spent atomization gas;
(c) feeding at least a portion of the particulate-free atomizating gas to a purification unit to remove selected impurities; and
(d) recirculating the purified atomizating gas back into at least one atomization furnace.

2. The process of claim 1 wherein the atomizing gas in step (a) is selected from the group consisting of argon, helium, nitrogen, hydrogen and mixtures thereof.

3. The process of claim 1 wherein the molten material in step (a) is selected from the group consisting of iron, steel, copper, nickel, aluminum, magnesium, lead, tin, titanium, cobalt, vanadium, tantalum and alloys thereof.

4. The process of claim 1 wherein the spent atomizing gas in step (a) contains at least one impurity selected from the group consisting of oxygen, nitrogen, water, carbon dioxide, carbon monoxide, metal and metal salts.

5. The process of claim 1 wherein the purification unit in step (c) has at least one purification system selected from the group consisting of a thermal swing absorbent, pressure swing absorbent, copper oxide getter, cryogenic adsorption column, and membrane.

6. An apparatus for producing atomized powder using recirculating atomization gas comprising at least one atomization furnace having at least one input adapted for receiving atomization gas and receiving molten material and at least one output adapted for discharging spent gas and discharging powder; a particulate removal unit coupled to said at least one atomization furnace and having an output adapted for removing particulates in said spent gas from said at least one atomization furnace; and a purification unit coupled at one end to the particulate removal unit and at an opposite end to the input of at least one atomization furnace and operatable such that atomization gas can be recirculated to said at least one atomization furnace from the purification unit for the production of atomized powder on a continuous basis.

7. The apparatus of claim 6 wherein the particulate unit is selected from the group consisting of cartridge filters, scrubbers and cyclones.

8. The apparatus of claim 6 wherein the purification unit has at least one purification system selected from the group consisting of a thermal swing absorbent, pressure swing absorbent, copper oxide getter, cryogenic adsorption column, and membrane.

9. The apparatus of claim 6 wherein said input of the furnace has gas divider means for directed at least a portion of an input gas to the purification unit and thereby bypassing the particulate removal unit.

10. The apparatus of claim 6 wherein low pressure means are coupled between the particulate removal unit and the purification unit.
